# EUROPEAN PATENT APPLICATION

(11) **EP 4 786 134 A1**
(43) Date of publication of application: **05.08.2026**
(21) Application number: 25155894.6
(22) Date of filing: 04.02.2025
(51) Int. Cl.: B29C 44/34, C08J 9/30

(54) **SYSTEM AND METHOD FOR GENERATING A FOAM**

(71) Applicant: Tremco CPG Netherlands B.V., 4241 WC Arkel (NL)
(72) Inventor: LANSBERGEN, Adrianus Jozephus Hendricus, 6862 WV Oosterbeek (NL); SCHOOTSTRA, Siebe, 4208 DC Gornichem (NL); VAN HERPEM, Goselinus, 3371 CX Hardinxveld-Giessendam (NL); KUIPER, Jelmer Jeroen, 7512 HG Enschede (NL); DAMHUIS, Karen Elisa, 7581 BZ Losser (NL); CAN DEN BELT, Mieke, 7552 TZ Hengelo (NL)
(74) Representative: Lippert Stachow Patentanwälte Rechtsanwälte

(57) **Abstract**

A system for making a cross-linked and/or cured foam comprises first and second containers for liquid components, a source for pressured gas, a first mixer for dispersing the gas in one of the liquid components, a second mixer for mixing the dispersion with the other liquid component, thereby starting a crosslinking and/or curing reaction, and means for application of the reaction mixture at the desired place is disclosed. A method for use of this system to make a cross-linked and/or cured foam is also disclosed. The system and method avoid climate-harmful emissions from blowing agents.

The system and method are useful for making foams for use in construction work, e.g. for thermal insulation, gap filling, et cetera, or for use as an adhesive.

## Description

### Field of the invention

The invention relates to a system for generating a foam and a method for generating a foam, in particular a cross-linked or cured foam, the foam being useful *inter alia* as a construction foam, an insulation foam or an adhesive foam. The invention further relates to the use of such a system.

### Technical background of the invention

Solid foams comprising organic and/or inorganic materials are widely in use in many fields of technology. They may be rigid, resilient or elastic. Frequently they are produced as pourable materials on the site of use, where they accept the desired shape and then crosslink and/or cure to solid state. Examples of application are in construction work for filling gaps or coating roofs or floors for providing acoustic and/or thermal insulation. These in-situ foams are usually made by reacting two monomeric or oligomeric liquid compounds in presence of a so-called blowing agent which generates bubbles while the liquid mixture increases viscosity and turns eventually into a solid foam.

The most common materials for such solid in-situ foams are polyurethanes generated by mixing multifunctional hydroxy compounds (polyols) with multifunctional isocyanates in presence of a blowing agent which expands the mixture upon depressurization. There is however some concern about this technology because:
- isocyanates are irritant and sensitizing chemicals which may be harmful to the health of people working with them and also of people living with the foams produced this way, since there may be remainders of excess isocyanates in the foams,
- the typical blowing agents are hydrocarbons, optionally halogenated ones, which escape into the atmosphere after use and may have detrimental effects there, *inter alia* as so-called climate gases.

Moreover, the materials for making construction foams are mostly packed in small and medium-sized cans, which creates much waste material after use.

There are attempts to replace the polyurethane foams requiring isocyanates for their generation by other polymer foams which can be prepared from less harmful ingredients. For example, EP 1 939 241 Al (Heuts et al. to Rohm and Haas Co.) discloses a foam comprising the reaction product of multifunctional acrylate compounds with multifunctional aceto- or cyano-acetate compounds or acetoacetamides.

US 8,604,091B2 (Olang to Owens Corning) describes non-isocyanate spray foams that include an amide-based oligomer containing pendant carboxylic acid groups and a polyfunctional aziridine cross-linking agent.

US2020/0181348A1 (Thomas et al. to Dow) discloses a polymer foam formulation comprising a polyaldehyde, a polycarbamate, a catalyst and an inorganic powder, wherein the polyaldehyde is in an A-side component and the polycarbamate is in a B-side component of the polymer foam generating system.

There are also attempts to create polyurethane foams without utilizing isocyanates. The most frequently described approach is to generate a new link between monomer or oligomer molecules by reacting a cyclic carbonate group with an amino group. This is for example described in US2017/0218124A1 (Lauth to Faurecia Interieur Industries) and WO2013/028292A1 (Dow Global Technologies). The reactions employed here need use of catalysts.

In all these attempts conventional blowing agents as described above are employed. Typically, these blowing agents act by dissolving within the components of the foam generating system and generating steam bubbles when pressure is released and/or temperature is increased, for example by the reaction of the components.

US 9,279,040 B2 describes a formulation for generating a foam based upon Michael chemistry, which is processed in a commercial system called FrothPak (DuPont). This system consists of two containers pressurised with nitrogen for the A-side and B-side preparations, respectively. At least the A-side preparation comprises a commercial blowing agent. Both preparations are delivered by the nitrogen pressure through separate lines into a handpiece comprising a mixhead and a spraying nozzle.

It is desirable to have a system and method for making a foam which do not release harmful and/or flammable gases or vapours and do not need blowing agents which release climate gases to the atmosphere. Moreover, it would be desirable to have a system and method for making a foam in a continuous process which allows to cover larger areas like for example roofs or floors or in an exterior insulation and finishing system with a foam layer of significant thickness or to fill large joints or as a continuous source for filling or adhesive foams, e. g. in manufacturing lines. Preferably, the cured foam shall have a uniform and/or fine cell structure.

The technical problem described above is solved by a system and method as well as a use of said system in accordance with the appended independent claims 1, 10, and 16.

Preferably, the system according to the present invention is adapted and/or is used to carry out the method according to the present invention. Preferably, the use of the system according to the present invention is directed to applying the method according to the present invention. Preferably, all definitions, features and/or properties of components A and/or B, compounds X, Y, pressurized gas and catalyst or any other components or features of the composition and its components are the same with respect to the system, the method, and the use of the system, respectively. Preferably, any features of the system, the method, and the use of the system are disclosed independently from one another, even in case the system, method and/or use are described in relation to one another.

### Brief description of the drawing

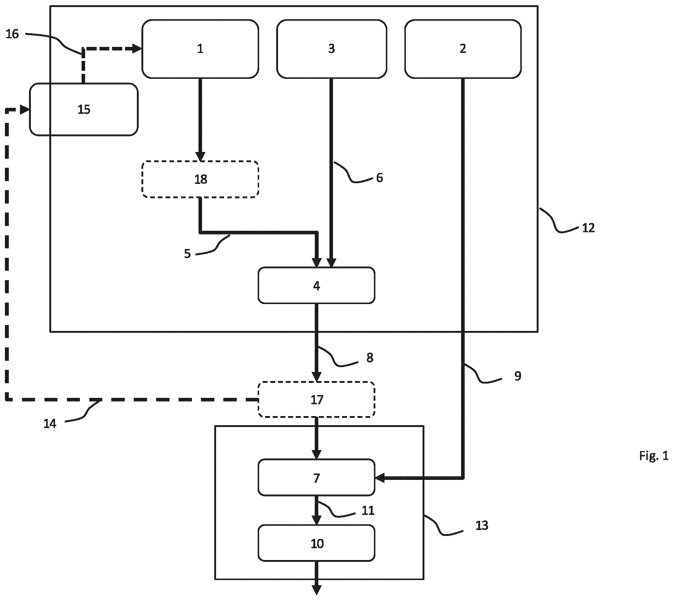

Figure 1 is a schematic representation of an embodiment of the system according to the invention.

### Detailed description of the system

The subject of the present invention comprises a system for producing a foam, in particular a cross-linked foam, more in particular a cured foam, said foam being optionally elastic, such as for example an insulation foam, a construction foam or an adhesive foam. Preferably, this foam is made from reacting and/or curing a mixture of two or more organic compounds, more preferably in presence of a catalyst. The system comprises a first container for containing a first liquid component, for example liquid component A, a second container for containing a second liquid component, for example liquid component B, a pressurized gas supply for preferably continuously supplying a pressurized gas, a first mixer, preferably a dynamic mixer, said mixer comprising a pressure-tight container and at least one first mixing means inside said container, said first mixer being arranged for dispersing the pressurized gas in the gaseous state into the first liquid component, thereby obtaining a dispersion, said first mixer being fluidly connected to the first container for receiving the first liquid component and to the pressurized gas supply for receiving the pressurized gas, a second mixer, preferably a static mixer, for mixing the dispersion with the second liquid component, thereby starting a reaction and obtaining a reaction mixture, said second mixer comprises a container and second mixing means inside the container, said second mixer being fluidly connected to the first mixer for receiving the dispersion of the gas in the first liquid component and to the second container for receiving the second liquid component, and an application means fluidly connected to the second mixer for receiving the reaction mixture and arranged for applying the reaction mixture at a desired location, thereby allowing the reaction mixture to expand and react, thereby generating the cross-linked and/or cured foam. Preferably, the first liquid component and the second liquid component are different to each other. Preferably, the liquid component A and the liquid component B are different to each other. When the second liquid component is mixed with the dispersion in the second mixer thereby starting a reaction and obtaining a reaction mixture, than preferably a reaction between the first liquid component and the second liquid component is started or a reaction between at least one compound X of the first liquid component and at least one compound Y of the second liquid component is started. Preferably, the first liquid component and the second liquid component are the same as described with respect to the method of the present invention. The compounds X and Y preferably are different to each other. Preferably, the compounds X and Y are the same as described with respect to the method of the present invention. The pressurized gas preferably is an inert gas, not being involved in the said reaction, preferably also with respect to the method of the present invention.

Where in the following detailed explanation of the system of the invention reference is made to the system, method, or features thereof, the disclosure made above shall be included by reference.

The foam that may be produced by means of said system may in particular be the foam described below with respect to the method. However, the system may also be suitable for producing other types of foams.

The first container for containing the first liquid component may be any suitable container, such as, but not limited thereto, a tank, barrel or drum. The first container may in particular be used for containing or storing the first liquid component at the site of use of the system and/or may be used for transporting the first liquid component from a production site to the site of use of the system. The first liquid component may in particular be liquid component A. The first container may have an opening to the atmosphere in order to enable replenishment of first liquid component, e.g. component A. In this case it may be necessary to include pumping and/or metering means, for example a metering pump, in the fluid connection to the first mixer in order to enable feeding the first liquid component against the pressure within the first mixer. Details of liquid component A are provided below with respect to the method of the invention.

The second container for containing the second liquid component may be any suitable container, such as, but not limited thereto, a tank, barrel or drum. The second container may in particular be used for containing or storing the second liquid component at the site of use of the system and/or may be used for transporting the second liquid component from a production site to the site of use of the system. The second liquid component may in particular be liquid component B. Details of liquid component B are provided below with respect to the method of the invention.

The volumes of the first and second containers will depend on the rate of foam generation by the method of the invention, e.g. as volume or weight units per time unit. Since preferably the rate of consumption of first liquid component is higher than that of the second liquid component, the second container may be smaller than the first container.

The pressurized gas supply for supplying the pressurized gas may be any suitable pressurized gas supply. Preferably, the gas supply is continuous, that means that it is suited for continuous operation. For example, the pressurized gas supply may comprise a compressor for compressing a gas at a pressure exceeding atmospheric pressure, thereby obtaining said pressurized gas. Said compressor may be used for pressurizing said gas in use of the system when pressurized gas is needed. Alternatively, or additionally, the pressurized gas supply may comprise a gas container, such as a gas cylinder, for containing said pressurized gas. In the latter example, the gas container for containing the pressurized gas may be filled with the pressurized gas at a location remote from the site of use of the system and then transported to the site of the system, or it may be used for containing the pressurized gas that is pressurized by means of said compressor, such that it may be temporarily stored on site. Preferably, the gas supply of the system comprises an installation which enables replacement of the pressured gas container without interruption of the gas stream. The pressurized gas may be any of the gasses described below with respect to the method of the invention. Details of the pressurized gas are provided below with respect to the method of the invention.

The first mixer may be any suitable type of mixer. Preferably the first mixer is a dynamic mixer. A dynamic mixer may mean that it comprises moveable mixing means inside its container, such as for example components that are moveable in rotation and/or translation, as well as drive means for driving the moveable components. By means of the first mixer, for example by means of moving the moveable components of the first mixer, the pressurized gas in the gaseous state is dispersed into the first liquid component, thereby obtaining said dispersion. The effectivity of the moveable mixing means may be enhanced by static elements such as e.g. baffles attached around the inner surface of the container. In order to achieve a fine dispersion, the mixing means should preferably be able to achieve a turbulent movement of the liquid component A with high shear stress. Well-known dynamic mixing means are propeller and Rushton turbines. An example for a static mixing means for dispersing a gas in a liquid is a so-called ring injector. Dispersion of the pressurized gas into the first liquid component may take place in the pressure-tight container of the first mixer. The first mixer can be fluidly connected to the first container for receiving the first liquid component and to the pressurized gas supply for receiving the pressurized gas in any suitable way and/or by any suitable means. Optionally a positive-displacement pump like a gear pump, screw pump, piston pump may be provided for feeding the first liquid component to the first mixer at any desired pressure, preferably a pressure that is at least equal to the pressure of the pressurized gas.

The first mixer may be operated continuously or batchwise.

It is also possible to combine static and dynamic mixing means in the container of the first mixer, e.g. a ring injector and a propeller.

The first mixer can be fluidly connected to the second mixer for feeding the gas-in liquid dispersion therein.

The second mixer may be any suitable type of mixer. Preferably the second mixer is a static mixer. A static mixer may mean that it comprises static components for mixing, i.e. components that are not moveable. The second mixer comprises a container and mixing means inside the container. Typically, static mixers are operated continuously and the container may then be a cylinder or pipe, which guide a stream of the components to be mixed. The energy of movement of the components contributes to the energy consumption due to mixing. As described above, static mixers are well known in the art. By means of the second mixer the dispersion and the second liquid component are mixed, such that a reaction is started and a reaction mixture is obtained. The second mixer can be fluidly connected to the first mixer for receiving the dispersion and to the second container for receiving the second liquid component in any suitable way and/or by any suitable means. In one embodiment, a preferably adjustable means such as a valve for controlling the flow of the dispersion and/or the pressure difference between first and second mixers may be integrated in the connection or flow channel between first and second reactor. Preferably, such adjustable means may also be comprised in the fluid connection between the second container and the second mixer.

The application means may be any suitable type of application means. The application means are arranged for releasing the reaction mixture and for applying the reaction mixture at a suitable location. As described above, the application means may comprise a valve or nozzle, for example a spray gun or a slot-nozzle. The application means may be fluidly connected to the second mixer for receiving the reaction mixture in any suitable way and/or by any suitable means.

In one preferred embodiment of the system of the invention the first and second containers and optionally the first mixer and/or the pressurized gas supply and/or the second mixer are comprised by a common housing. The common housing may be any suitable type of housing and/or may have any suitable size, for example adapted to the type of application. For example, for larger sized applications, the common housing may be a housing comprised by a vehicle, such as a truck or the like. For example, for medium sized applications, the common housing may be a sort of trolley. For small sized applications the housing may comprise straps or the like, such that the housing may be carried on the back of a person. The housing may be moveable, for example by means of said housing comprising wheels, or by means of said housing being comprised by a vehicle, or said housing being a carriable housing. Preferably, the first and second containers and the first mixer are comprised by a common housing. Preferably, the first and second containers and the pressurized gas supply are comprised by a common housing. Preferably, the first and second containers, the first mixer and pressurized gas supply are comprised by a common housing. Preferably, the first and second containers, the first mixer and the second mixer are comprised by a common housing. Preferably, the first and second containers and the first mixer, the pressurized gas supply and the second mixer are comprised by a common housing. This makes it considerably easier to apply the method of the present invention, safes time to build up the system for applying the method and avoids that the said components as mentioned above which are placed in the common housing must be separated from one another when the system is transported another location for carrying out the method of the invention and avoids that (i) the components A and/or B and/or (ii) the compounds X and/or Y may unintentionally be distributed, for instance in the surrounding area.

At least the application means is preferably not part of the optionally provided common housing, such that at least the application means may be held at a distance from the common housing. For example, the application means may be a hand-held application means that can easily be held at any desired location for applying the reaction mixture at any desired location, which location may be remote from the common housing. This allows the common housing to remain at a first location and to be moved to a different location only occasionally and/or only when needed, and the application means to be held at a second location, i.e. the desired location for applying the reaction mixture. Optionally the second mixer may be part of a hand-held device which comprises both the second mixer and the application means. An advantage of such a hand-held device comprising both the second mixer and the application means is that the length of the transport path between the second mixer and the application means may be relatively short, such that the expansion and reaction of the reaction mixture may preferably take place only after the reaction mixture being applied by the application means and not while transporting the reaction mixture to the application means. If the length of the transport path between the second mixer and the application means is not or less important, for example for foams having a relatively long expansion and/or reaction time, the second mixer may be part of the common housing.

The system preferably comprises at least one and preferably multiple transport means, such as a hose, tube, or the like, for fluidly connecting the first container to the first mixer and/or the pressurized gas supply to the first mixer and/or the second container to the second mixer and/or the first mixer to the second mixer and/or the second mixer to the application means. The transport means may be any suitable type of transport means, such as the above-described hose, tube, or the like. All or some of the transport means may be either rigid or flexible. The transport means connect the outlet of one element of the system to the inlet of another element. In some embodiments the outlet of one element may directly connect to the inlet of another element, such as for example the outlet of the second mixer to the inlet of the application means, for example in case the second mixer and application means are combined in a single hand-held unit as described above, such that no transport means therebetween is required. Preferably, said transport means are provided for fluidly connecting the first container to the first mixer and said transport means are provided for fluidly connecting the pressurized gas supply to the first mixer, for instance directly or via a pump for feeding the first component to the first mixer. Preferably said transport means are provided for fluidly connecting the second container to the second mixer. Preferably said transport means are provided for fluidly connecting the first mixer to the second mixer. Preferably said transport means are provided for fluidly connecting the first mixer and/or the second mixer, for instance directly or via means for effecting flow and/or preventing reflux of components A and B and/or the pressurized gas. Said transport means, such as a hose, tube, or the like, for fluidly connecting said above captioned components preferably are permanently attached to said components when the system is transported from a first location of application of the method to another location, preferably unless maintenance work at the system is made. Said transport means may be detachably fastened to the said compoments, without being restricted thereto.

Preferably the application means is arranged for applying the reaction mixture at a minimum output rate of 1 l/min, preferably 2 l/min, respectively, and/or at a maximum output rate of 200 l/min. The minimum output rate of may be 5 l/min or 10 l/min or 25 l/min, respectively. The maximum output rate may be 100 l/min or 150 l/min. Such output rates are suitable for the intended applications of said foam. The output range may in particular be chosen in dependence of the type of application and/or based on the size or volume of a specific project.

In another preferred embodiment the system comprises a discharge means arranged downstream of the first mixer and upstream of the second mixer, for discharging the dispersion prior to being fed to the second mixer, and comprising a valve for selectively discharging the dispersion via the discharge means or for feeding the dispersion to the second mixer. An advantage of such discharge means is that when, at least temporarily, no more foam is required, the dispersion may be discharged before being fed to the second mixer. This may reduce or preferably prevent that the dispersion will solidify in the second mixer, because the reaction mixture present in the second mixer may be applied and the feed of fresh dispersion may be prevented, which may facilitate cleaning of the second mixer.

Preferably the discharge means fluidly connects to the first container for returning the dispersion to the first container, preferably via a defoamer or degasser. An advantage of this embodiment is that the dispersion is returned to the first container, preferably after being defoamed in a defoamer, such that it may again be stored in the first container and supplied to the first mixer when needed. This may reduce waste.

Preferably, the transport means of the system may comprise means for effecting flow and/or preventing reflux of components A and B, the pressureized gas and the reaction mixture, e.g. in order to avoid any mixing reactions not intended. For example, it should be avoided that liquid component B contacts liquid component A before arriving at the second mixer. This can for example be achieved by pumps and/or check valves.

The system of the invention is intended and suited for performing the method of the invention as described herein.

### Detailed description of the method

The subject of the present invention also comprises a method for generating a foam, in particular a cross-linked foam, more in particular a cured foam, comprising the steps of: providing in a first container a liquid component A comprising at least one compound X, optionally at least one compound Y, and at least one surfactant, wherein one molecule of compound X comprises a plurality of first functional groups and one molecule of compound Y comprises a plurality of second functional groups, wherein the first functional groups in compound X are capable of undergoing a reaction with the second functional groups in compound Y in presence of a catalyst, thereby creating bonds between molecules of compounds X and Y, providing in a second container a liquid component B comprising at least one catalyst for the reaction between the first and the second functional groups, and at least one compound Y, if liquid component A contains no compound Y, providing a pressurized gas in the gaseous state from a pressurized gas supply, feeding component A into a first mixer, preferably a dynamic mixer, comprising a pressure-tight container, feeding a pressurized gas in the gaseous state into the first mixer, thereby creating a positive pressure in the first mixer, dispersing the pressurized gas in the gaseous state into component A by means of the first mixing means within the first mixer, thereby generating a gas-in-liquid dispersion, transferring the dispersion into a second mixer comprising second mixing means inside the second mixer, preferably a static mixer, simultaneously feeding component B into the second mixer, mixing component B with the dispersion, thereby starting the reaction and generating a reaction mixture in form of a cross-linking foam, releasing the reaction mixture from the second mixer, allowing the reaction mixture to expand and react, thereby generating a cross-linked and/or cured foam.

The method described here is particularly suited for being performed with the system described above.

Providing the liquid component A may be performed in any suitable manner, for example by mixing the ingredients of component A in a container close to the point of use, preparing component A in a remote plant and delivering in transport containers such as tanks, barrels, or drums, to the point of use, etc. Selection of the ingredients for the method may be done under the prerequisite that the shelf life of component A is preferably at least 3 months, more preferably at least 6 months, most preferably at least one year. Shelf life is here defined as a period of time after which the physical properties of the component A, such as e. g. density, colour, viscosity, do not show any significant change. In order to enable a sufficient shelf life, preferably component A does not not contain a catalyst for the reaction of compounds A and B.

Feeding component A into the first mixer can be performed by means of conventional equipment comprising pumps, preferably positive-displacement pumps like gear pumps, screw pumps, piston pumps, and tubes and hoses. It is necessary that such pump is capable to provide a pressure at least equal to the pressure of the pressurized gas mentioned below.

A pressurized gas supply is provided in order to provide a pressurized gas in the gaseous state. The pressurized gas is being fed into the container of the first mixer. This may be done concurrently with feeding component A into the first mixer. Suitable as a pressurized gas is any gas which is in the gaseous state under the conditions of the method.

Depending on the nature of the gas, it can be provided in gas cylinders or it can also be provided on-site, for example, by a compressor. The latter is advantageous with ambient air, optionally after purification and drying.

The pressurized gas in the present invention is a gas, which is present in its gaseous state even if compressed, preferably a permanent gas. This means, that it is not a liquid condensate and it does also not significantly dissolve in the component A.

The pressurized gas is preferably nitrogen, oxygen, hydrogen, air, argon, neon, helium, krypton, xenon, nitrous oxide, carbon dioxide, or a mixture consisting of two or more of those. Particularly preferred is air from the environment.

The pressurized gas is preferably an inert gas with respect to the reaction of the components A and B. The pressurized gas is preferably an inert gas with respect to the reaction of the compounds X and Y. The pressurized gas is preferably an inert gas with respect to the catalyst.

It is preferred to establish a predefined ratio between component A and the pressurized gas. Depending on the gas pressure and the foam volume desired this can vary within a broader range, for example the volume of the pressurized gas determined under normal conditions (273 K, 1 bar) can be up to 50 times or up to 20 times or up to 10 times or up to 5 times or twice of the volume of component A, including any range between any two of these numbers.

Preferably the gauge or positive pressure (positive difference to the atmospheric pressure which within this application is defined to be 1 bar, i.e. 100 kPa, as a reference) of the pressurized gas within the first mixer is in the range between 0.1 bar and 20 bar or may be higher, preferably 0.5 bar, more preferably between 1 bar and 15 bar or 2 bar or 4 bar or 7 bar or 10 bar including any range between any two of these numbers, or may be 15 bar or 10 bar. This may be given at the temperature at which the invention is carried out, i.e. at ambient temperature, more preferably between 5°C and 35°C, most preferably between 15°C and 25°C, for instance at 20°C.

The step of feeding component A and the pressurized gas into the first mixer may be performed continuously or batchwise. In the latter case the step of dispersing the pressurized gas in component A can also be performed batchwise. After completion of one batch, continued feeding of the pressurized gas can help to transfer the dispersion into the second mixer.

Preferably the method of the invention is performed continuously in order to enable uninterrupted pouring of the foam generated into its place if desired. This is an advantage, where large gaps or voids are to be filled or large areas like roofs or floors are to be coated. In this case, it is advantageous to continuously feed the components A and B, for example by suitable pumps, and to have feeding of component B ready to start as soon as the dispersion of component A arrives at the second mixer. This embodiment allows to provide the raw materials in reusable bulk packages and to save packaging waste.

Dispersing the pressurized gas in component A is preferably accomplished by a dynamic mixer, more preferably such as a rotating stirrer or propeller as the first mixing means. In order to obtain a dispersion with small gas bubbles, it is preferred to design and operate the stirrer so that a high shear stress is generated at least in specific parts of the container volume. The shear stress can be increased by installing baffles in addition to the stirrer on the walls in the free volume of the first mixer. It is also possible to apply a combination of dynamic like propellers and static mixers like ring injectors for the gas or baffles.

Preferably the viscosity of component A before dispersing the gas is between 20 mPas and 20,000 mPas or between 20 mPas and 10,000 mPas or between 30 mPas and 2,000 mPas or between 50 mPas and 500 mPas, measured at 20°C and shear rate 10 s⁻¹according to EN ISO 3219:1994.

Viscosity of component B is generally kept low, preferable lower than 1000 mPas or 100 mPas or 50 mPas or 20 mPas, respectively, including any range between two of these numbers, when measured at 20 °C and shear rate 10 s⁻¹ according to EN ISO 3219:1994.

If dispersing the pressurized gas in the component A is performed continuously, it is preferred to guide the fluid stream so that the outlet of the first mixer is remote from the inlet of component A and the pressurized gas in order to make sure that the dispersion step is completed when the dispersion reaches the outlet.

In the next step of the process the dispersion of the pressurized gas in the component A is transferred to a second mixer. This can be accomplished by conventional equipment, like tubes and hoses. The second mixer can also be immediately connected to the first mixer. If the second mixer is located at a lower level compared to the first mixer, transfer is easily effected by action of gravity. Also, the pressure of the pressurized gas will bring about transfer to the second mixer as soon as pressure there decreases after releasing some of the reaction mixture from the second mixer.

Concurrently with the transfer of the dispersion to the second mixer, component B is fed into this mixer.

In the step of mixing the dispersion of the pressurized gas in component A with component B, since preferably only a small amount of rather low viscosity component B is mixed with the foamed component A and no new foam needs to be generated, it is not necessary to apply a high shear stress. Therefore, a static mixer is preferred for mixing. Construction of such a mixer is known to the skilled person and can be quite simple, for example it can include a series of baffles which repeatedly divide the stream of material and then blend different parts of the stream. These baffles can e. g. be made from metal and even also from plastic. Other constructions of low shear stress mixers are known in the art. Surprisingly, it was found that even small amounts of liquid component B were homogenously mixed into large amounts of liquid component A by a static mixer.

In order to facilitate cleaning of the equipment after use, the static mixer which after use normally contains solidifying material difficult to remove, can preferably be disposable. On the other hand, it is also possible to interrupt foam generation if desired by first closing feed of component B and then flush the second mixer for a certain time period with component A, the dispersion of the gas in component A, the gas alone, or a dedicated flushing fluid, and to discard the flushing remainders. Also, it is possible to interrupt feeding of the dispersion from the first to the second mixer and then flush the second mixer with component B or a suitable flushing liquid.

By mixing the components A and B the catalyst gets access to compounds X and Y so that it initiates the reaction between these compounds and creates a reaction mixture. This reaction creates new bonds between the molecules of compounds X and Y, resp. In consequence the viscosity of the reaction mixture increases and eventually the mixture arrives at a nearly solid-state. It is important, that the reaction mixture can be released from the second mixer as long as its viscosity is not too high and the foamed reaction mixture is still pourable.

Releasing the reaction mixture means for example, that a controllable application means, for example comprising a valve and/or nozzle, for example a spray gun, is connected to the outlet of the second mixer and is operated either manually or by automatic control. This can be done by conventional means like a flexible hose which allows manually distributing the foam over a wide area. If on the other hand the foam is intended for manufacture of foamed articles, it is also possible to use stationary tubing to supply the foam to a moulding station.

Releasing the reaction mixture from the second mixer means also release from a more or less pressurized environment into ambient pressure. In consequence the bubbles of the pressurized gas in the foamed reaction mixture expand and cause the volume of the reaction mixture to increase until the internal pressure of the bubbles has matched the ambient pressure. In contrast to polyurethane foam which keeps growing over certain time after release due to the formation of CO₂ by the ongoing reaction of remaining isocyanate with humidity, the foams of the present invention will cease growing soon after release from the second mixer, e. g. within a few seconds. This may be an advantage because the foam will achieve the desired shape soon after release from the second mixer, even if the curing reaction is not yet concluded.

Preferably the pressure within the first mixer is in the range between 0.1 and 20 bar or may be even higher, preferably 0.5 bar, more preferably between 1 bar and 15 bar or 2 bar or 4 bar or 7 bar or 10 bar including any range between any two of these numbers, wherein the pressure may be 15 bar or 10 bar. This pressure is obviously equal to the pressure of the pressurized gas, if surface effects are neglected, and will influence the growth of the final foam after release from the second mixer. This may be given at the temperature at which the invention is carried out, i.e. at ambient temperature, more preferably between 5°C and 35°C, most preferably between 15°C and 25°C, for instance at 20°C.

In one preferred embodiment the pressure in the first and second mixers is nearly the same and thus the reaction mixture starts expanding only after release from second mixer by means of the controllable valve. It may also be desirable, to have the component A partly expanded when entering the second mixer which can for example be accomplished by passing an optionally adjustable throttle valve between the first and second mixer. In another preferred embodiment the dispersion is substantially completely expanded after leaving the first mixer. The pressure in the second mixer is in this case close to the ambient pressure and just sufficient to drive the reaction mixture out of the second mixer.

Preferably, compound X is a multifunctional Michael donor compound and compound Y is a multifunctional Michael acceptor compound. In this case, the catalyst is any compound useful for initiating the Michael reaction, e.g. basic compounds like carbonates, phosphates, alkoxides, phenolates of potassium and sodium, tetramethylammonium hydroxide, organic nitrogen compounds like N,N,N',N'-tetramethylguanidine, 1,8-diazabicyclo(5.4.0)undec-7-ene, 1,5-diazabi-cyclo[4.3.0]non-5-ene. Depending of the catalyst, water or organic solvent may be used for making up liquid component B.

A multifunctional Michael donor is a compound, the molecules of which exhibit a plurality of first functional groups having Michael donor property. The Michael donor must be capable of a nucleophilic attack. This means, that the functional group for example is capable of releasing an activated hydrogen atom, thus forming a carbanion in order to create a bond to the corresponding electrophilic functional Michael acceptor group. Such Michael donor groups may for example comprise an active hydrogen atom which can be easily released to create a carbanion. The deprotonation can be promoted by a basic catalyst.

A multifunctional Michael acceptor is a compound, the molecules of which exhibit a plurality of second functional groups having Michael acceptor property. This means, that it must be capable to undergo a Michael addition reaction with an activated Michael donor group. The Michael acceptor groups may e.g. comprise a carbon double bond in α,β-position to an activating group such as a carbonyl group in aldehydes, ketones, esters, carbonic acid amides, or nitrile groups. Preferably the pressurized gas is selected from the group consisting of nitrogen, oxygen, hydrogen, air, argon, neon, helium, krypton, xenon, nitrous oxide, carbon dioxide, and mixtures consisting of two or more of the foregoing. Particularly preferred is air from the environment.

Preferably the ratio between the volume flow rates of the components A and B is established at a predefined level, for example 50 to 1, 20 to 1, 15 to 1, 10 to 1, 7.5 to 1, 5 to 1, 3 to 1, 2 to 1, 1.5 to 1 or any range between any two of these values. More preferred is a ratio of about 10:1.

The method of the invention is preferably carried out at ambient temperature, more preferably between 5°C and 35°C, most preferably between 15°C and 25°C.

Preferably the resulting foam is a closed-cell foam. It is generally solid but may show some resilience, elasticity, and/or yielding, e.g. when used in construction work in order to maintain sealing if there is some movement in the building structure. Depending on the structure of compounds X and Y it may also have elastic properties. This may be an advantage in case of some movement occurring in the joint between construction parts which has been sealed by the foam.

The compressive strength of the foam generated from the method of this invention is preferably higher than 30 kPa at 10% strain and more preferably higher than 50 kPa or 80 kPa at 10% strain, measured in accordance with ASTM 1621-00.

The density of the foam generated from the method of this invention is preferably less than 500 kg/m³, for example between 200 and 20 kg/m³, particularly preferred between 100 and 50 kg/m³, further particularly preferred a density of less than 50 kg/m³ or a density between 45 and 25 kg/m³.

The foam produced by the system and method of the present invention can be utilized in several technical fields, for example for closing and sealing gaps and holes as well as providing insulation layers in building structures, for manufacturing packaging materials, particularly moulded articles, and for producing cushioning and sound reducing parts for mechanical engineering applications. Especially, the foam produced by the system and method of the present invention can be utilized for insulation of floors, ceilings and/or of walls, especially of floors, ceilings and of walls of rooms in which human beings might be present and/or in which devices of human beings like furniture and/or vehicles might be or are present or of buildings in which human beings might be or are present. The foam may be applied in a continuous layer of 0.5 square meter or 1 square meter or 2 square meter or 2 square meter or 5 square meter or 10 square meters. Especially, the foam produced by the method of the present invention can be utilized in a thickness with respect to be applied foam or foam bead of for insulation of floors, ceilings and/or of walls, wherein the thickness may be 0.5 cm or 1 cm or 1.5 cm or 2 cm. All of the issues mentioned above may be present in combination. The foam produced by the system and method of the present invention as utilized above may be utilized in one shot or in one continuous step of application. Especially, and e.g. in combination thereof, the foam produced by the system and method of the present invention can be utilized in a width of 0.5 cm or 1 cm or 2 cm or 5 cm, respectively, especially more than 2 or 3 or 5 beads, each bead having the width as stated before, may be applied simultaneously. The beads may be applied for joining or gluing constructional elements like panels, blocks or sheets of constructional elements, including elements for insulation, for instance to a constructional e.g. to a constructive substructure.

It was surprisingly found, that crosslinked and/or curing foams could be obtained by first dispersing a pressurized gas in the gaseous state in a composition comprising at least one reactant of the curing/cross-linking reaction and then starting the reaction by admixing to this dispersion a second composition comprising a catalyst and if necessary, the other reactant.

### Detailed description of embodiments of the system

The invention will be further elucidated with reference to figure 1, which schematically shows a system according to a first embodiment of the invention. All of the features of the embodiments also are disclosed in general to the present invention, independent from one another or in combination with one another.

Figure 1 shows a system for producing a foam, for example the foam as described above with respect to the system and/or method and/or use of the system. In this first, exemplary embodiment the system comprises a first container 1 for containing a first liquid component, for example liquid component A as described above with respect to the system and/or method. The first container 1 may be any suitable container, such as, but not limited thereto, a tank, barrel or drum. The system further comprises a second container 2 for containing a second liquid component, for example liquid component B as described above with respect to the system and/or method. The second container 2 may be any suitable container, such as, but not limited thereto, a tank, barrel or drum. The system further comprises a pressurized gas supply 3 for supplying a pressurized gas, for example the pressurized gas as described above with respect to the system and/or method. The pressurized gas supply 3 may be any suitable pressurized gas supply, for example a compressor or gas container. The system further comprises a first mixer 4. The first mixer 4 is preferably a dynamic mixer. The first mixer 4 is arranged for dispersing the pressurized gas as received from the pressurized gas supply 3 in the gaseous state into the first liquid component as received from the first container 1, thereby obtaining a gas-in-liquid dispersion. The first mixer may comprise a pressure-tight container for dispersing the pressurized gas into the first liquid component under pressure. For receiving the first liquid component and the pressurized gas, the first mixer 4 is fluidly connected to the first container 1 and the pressurized gas supply 3, respectively, for example via respective hoses 5, 6. A pump 18 may be provided for feeding the first liquid component to the first mixer 4 under pressure, for example a pressure at least equal to the pressure of the pressurized gas. The system further comprises a second mixer 7. The second mixer 7 may be a static mixer. The second mixer 7 is arranged for mixing the dispersion with the second liquid component B, thereby starting a reaction and obtaining a reaction mixture. For receiving the dispersion and the second liquid component the second mixer 7 is fluidly connected to the first mixer 4 and to the second container 2, respectively, for example via respective hoses 8, 9. The system further comprises an applicator 10 that is fluidly connected to the second mixer 7 for receiving the reaction mixture, for example via a hose 11 or alternatively directly, without a hose, and that is arranged for applying the reaction mixture at a desired location, thereby allowing the reaction mixture to expand and react, thereby generating the foam, in particular a cross-linked foam. The applicator 10 may for example comprise a spray gun. In this embodiment the first container 1, the second container 2, the pressurized gas supply 3 and the first mixer 4 are comprised by a common housing 12, such as for example a trolley or truck. In this embodiment the second mixer 7 and applicator 10 are both part of a handheld device 13, which handheld device 13 may easily be held by hand at a desired location for applying the reaction mixture at that desired location and such that mixing the dispersion with the second liquid component takes place just upstream of the applicator 10, such that the transport path between second mixer 7 and applicator 10 may be relatively short, possibly even non-existing if the outlet of the second mixer 7 directly connects to the inlet of the applicator 10. The applicator 10 may e.g. apply the reaction mixture at a minimum output rate of 1 l/min, preferably 10 l/min, and/or at a maximum output rate of 200 l/min.

As is further shown in figure 1, the system may optionally comprise a discharge line 14 arranged downstream of the first mixer 4 and upstream of the second mixer 7, for discharging the dispersion prior to being fed to the second mixer 7. A valve 17 may be provided for selectively discharging the dispersion via the discharge line 14 or for feeding the dispersion to the second mixer 7. Controlling the valve may take place automatically or manually. As is further shown in figure 1, the discharge line 14 may feed the dispersion to a defoamer 15 which defoams the dispersion. After defoaming the dispersion, which may result in a liquid component that is identical or at least similar to liquid component A, the liquid component may be returned to the first container 1 via a return line 16. The discharge line 14 and/or return line 16 may comprise any suitable type of transport means, such as hoses, pipes, or the like.

It is noted that the invention is not limited to the shown embodiments but also extends to variants within the scope of the appended claims.

### Detailed description of the use of the system

The subject of the present invention also relates to the use of the system for producing a foam, in particular a cross-linked foam, more in particular a cured foam, said foam being optionally elastic, such as for example an insulation foam, a construction foam or an adhesive foam as described above, including any one or more of the above described features, in any suitable combination, said use comprising the steps of: a) providing the system as described above with respect to any one or more of the above described embodiments and/or having any one or more of the above described features, alone or in any suitable combination, b) dispersing the pressurized gas into the first liquid component by means of the first mixer, thereby generating said dispersion, c) mixing the dispersion with the second liquid component in the second mixer, thereby obtaining the reaction mixture, and d) applying the reaction mixture at a desired location, thereby allowing the reaction mixture to expand and react, thereby generating the cross-linked foam.

The details of the system for producing the foam and of the steps of dispersing the pressurized gas into the first liquid component by means of the first, dynamic mixer, mixing the dispersion with the second liquid component in the second mixer, thereby allowing the reaction mixture to expand and react, and applying the reaction mixture at a desired location, thereby generating the cross-linked foam, are described above with respect to the system and method and the disclosure made above shall be included by reference and not repeated here.

As described above, the reaction mixture may e.g. be applied at a minimum output rate of 1 l/min, preferably 2 l/min, and/or at a maximum output rate of 200 l/min.

As described above, the system may comprise a discharge means arranged downstream of the first mixer and upstream of the second mixer, for discharging the dispersion prior to being fed to the second mixer, and comprising a valve for selectively discharging the dispersion via the discharge means or for feeding the dispersion to the second mixer. In accordance herewith, the use of the system may comprise step e) of controlling a valve for selectively discharging the dispersion via the discharge means or for feeding the dispersion to the second mixer. Controlling the valve may take place automatically, for example by switching the valve to the position for discharging the dispersion upon or a certain time after controlling the application means to stop applying the reaction mixture, or manually, for example by switching the valve to the position for discharging the dispersion when a user of the system intends to stop using the system for a certain period of time. For example, first the valve may be controlled to discharge the dispersion and then the remainder of the reaction mixture present in the second mixer may be applied, thereby reducing the change an solidification of the reaction mixture in the second mixer.

Any further or alternative steps of the use of the system will be apparent for the skilled person based on the description of the system and/or the method. It is noted that the invention is not limited to the shown embodiments but also extends to variants within the scope of the appended claims.

### Working Example

A system for making a foam according to the invention was constructed as explained above. A mixture of 1,1,1-trimethylolpropane tris-acetoacetate and triacrylate of ethoxylated trimethylolpropane (molar ratio 1,8) together with a polyether-polydimethylsiloxane surfactant (liquid component A) was placed into the first container and an aqueous solution of potassium carbonate (30 weight percent, liquid component B) was placed into the second container. Ambient air was compressed to 10 bar by a compressor, fed into the first mixer and dispersed in liquid component A. The resulting dispersion as well as liquid component B were fed into the second mixer at a volume ratio of A:B = 10:1. After being released from the second mixer, the reaction mixture solidified to a rigid form having a density of about 90 kg/m³ within a few minutes.

## Claims

1. A system for producing a foam, in particular a cross-linked foam, more in particular a cured foam, said foam being optionally elastic, such as for example an insulation foam, a construction foam or an adhesive foam, said system comprising:
- a first container (1) for containing a first liquid component, for example liquid component A;
- a second container (2) for containing a second liquid component, for example liquid component B;
- a pressurized gas supply (3) for supplying a pressurized gas;
- a first mixer (4), preferably a dynamic mixer, said mixer comprising a pressure-tight container and at least one first mixing means inside said container, said mixer being arranged for dispersing the pressurized gas in the gaseous state into the first liquid component, thereby obtaining a dispersion, said first mixer being fluidly connected to the first container (1) for receiving the first liquid component and to the pressurized gas supply (3) for receiving the pressurized gas;
- a second mixer (7), preferably a static mixer, for mixing the dispersion with the second liquid component, thereby starting a reaction and obtaining a reaction mixture, said second mixer comprises a container and second mixing means inside the container, said second mixer being fluidly connected to the first mixer (4) for receiving the dispersion from the first mixer and fluidly connected to the second container (2) for receiving the second liquid component, and
- an application means (10) fluidly connected to the second mixer (7) for receiving the reaction mixture and arranged for applying the reaction mixture at a desired location, thereby allowing the reaction mixture to expand and react, thereby generating the cross-linked and/or cured foam.

2. The system of claim 1, wherein the first and second containers and optionally the first mixer and/or pressurized gas supply and/or the second mixer are comprised by a common housing.

3. The system of claim 2, wherein at least the application means and optionally the second mixer may be provided at a distance from the common housing and/or from one another.

4. The system of one of the preceding claims, comprising at least one and preferably multiple transport means, such as a hose, tube, or the like, for fluidly connecting the first container to the first mixer and/or the pressurized gas supply to the first mixer and/or the second container to the second mixer and/or the first mixer to the second mixer and/or the second mixer to the application means.

5. The system of claim 4, wherein at least one of the transport means comprises means for effecting flow and/or preventing reflux of components A and B and the pressurized gas, preferably pumps and/or check valves.

6. The system of one of the preceding claims, wherein said pressurized gas supply comprises a compressor for compressing a gas at a pressure exceeding atmospheric pressure, thereby obtaining said pressurized gas, and/or comprising a gas container, such as a gas cylinder, for containing said pressurized gas.

7. The system according to any of the preceding claims, wherein the application means is arranged for applying the reaction mixture at a minimum output rate of 1 l/min, preferably 2 l/min, and/or at a maximum output rate of 200 l/min.

8. The system of one of the preceding claims, comprising a discharge means arranged downstream of the first mixer and upstream of the second mixer, for discharging the dispersion prior to being fed to the second mixer, and comprising a valve for selectively discharging the dispersion via the discharge means or for feeding the dispersion to the second mixer.

9. The system of claim 8, wherein the discharge means fluidly connects to the first container for returning the dispersion to the first container, preferably via a defoamer or degasser.

10. A method for generating a foam, in particular a cross-linked foam, more in particular a cured foam, comprising the steps of
- in a first container providing a liquid component A comprising at least one compound X, optionally at least one compound Y, and at least one surfactant, wherein one molecule of compound X comprises a plurality of first functional groups and one molecule of compound Y comprises a plurality of second functional groups, wherein the first functional groups in compound X are capable of undergoing a reaction with the second functional groups in compound Y in presence of a catalyst, thereby creating a bond between molecules of compounds X and Y,
- in a second container providing a liquid component B comprising at least one catalyst for the reaction between the first and the second functional groups, and at least one compound Y, if liquid component A contains no compound Y,
- providing a pressurized gas in the gaseous state from a pressurized gas supply,
- feeding component A into a first mixer, preferably a dynamic mixer, comprising a pressure-tight container and first mixing means inside the first container,
- feeding the pressurized gas in the gaseous state into the first mixer, thereby creating a positive pressure in the first mixer,
- dispersing the pressurized gas in the gaseous state into component A by means of the first mixing means, thereby generating a dispersion,
- transferring the dispersion into a second mixer comprising second mixing means inside the second mixer, preferably a static mixer,
- optionally allowing the dispersion to partly or substantially completely expand,
- simultaneously feeding component B into the second mixer,
- mixing component B with the dispersion, thereby starting the reaction and generating a reaction mixture in form of a cross-linking foam,
- releasing the reaction mixture from the second mixer,
- allowing the reaction mixture to expand and react, thereby generating a cross-linked and/or cured foam.

11. The method of claim 10, wherein compound X is a multifunctional Michael donor and compound Y is a multifunctional Michael acceptor.

12. The method of one of claims 10 or 11, wherein the second mixer is flushed after use or is disposable.

13. The method of one of claims 10 to 12, wherein the ratio between the volume flow rates of the components A and B is 50 to 1, 20 to 1, 15 to 1, 10 to 1, 7.5 to 1, 5 to 1, 3 to 1, 2 to 1, 1.5 to 1 or more preferably about 10:1.

14. The method of one of the preceding claims 10 to 13, wherein (i) the positive pressure within the first mixer is in the range between 0.1 bar and 20 bar, more preferably between 1 bar and 15 bar or 2 bar or 4 bar or 7 bar or 10 bar and/or (ii) the viscosity of component A, when measured according to EN ISO 3219 at 20 °C and 10 s⁻¹, is between 20 mPas and 20,000 mPas or between 20 mPas and 10,000 mPas or between 30 mPas and 2,000 mPas or between 50 mPas and 500 mPas.

15. The method of one of the preceding claims 10 to 14, wherein the resulting cross-linked foam has a density of less than 500 kg/m³, preferably between 200 and 20 kg/m³, particularly preferred between 100 and 50 kg/m³, further particularly preferred a density of less than 50 kg/m³ or a density between 45 and 25 kg/m³.

16. Use of a system according to any of claims 1 to 9 for producing a foam, in particular a cross-linked foam, more in particular a cured foam, said foam being optionally elastic, such as for example an insulation foam, a construction foam or an adhesive foam, said use comprising the steps of:
a) providing the system according to any of claims 1 - 9;
b) dispersing the pressurized gas into the first liquid component by means of the first mixer, thereby generating said dispersion;
c) optionally allowing the dispersion to partly or almost completely expand,
d) mixing the dispersion with the second liquid component in the second mixer, thereby obtaining the reaction mixture, and
e) applying the reaction mixture at a desired location, thereby allowing the reaction mixture to expand and react, thereby generating the cross-linked foam.

17. The use of claim 16, wherein in step ed) the reaction mixture is applied at a minimum output rate of 1 l/min, preferably 2 l/min, and/or at a maximum output rate of 200 l/min.

18. The use of claim 16 or 17, comprising step f) of controlling a valve for selectively discharging the dispersion via the discharge means or for feeding the dispersion to the second mixer.
